(19) Europäisches Patentamt
European Patent Office
Office européen des brevets

(11) **EP 4 635 723 A1**

(12) **EUROPEAN PATENT APPLICATION**

(43) Date of publication:
**22.10.2025 Bulletin 2025/43**

(21) Application number: **25170273.4**

(22) Date of filing: **14.04.2025**

(51) International Patent Classification (IPC):
**B29D 30/06** (2006.01)

(52) Cooperative Patent Classification (CPC):
**B29D 30/0601; B29D 30/0662;** B29D 2030/0665

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.04.2024 FR 2403911**

(71) Applicant: **Goodyear France s.a.s.**
**92400 Courbevoie (FR)**

(72) Inventors:
• **AUDIBERT, Luc**
**L-9028 Warken (LU)**
• **REICHLING, Jean Alex**
**L-8156 Bridel (LU)**
• **FOURME, Sylvain**
**L-7663 Medernach (LU)**

(74) Representative: **Kutsch, Bernd**
**Goodyear S.A.**
**Patent Department**
**Avenue Gordon Smith**
**7750 Colmar-Berg (LU)**

(54) **MÉTHODE POUR LA PRÉPARATION D UN PNEUMATIQUE ET SYSTÈME OU USINE POUR LA PRÉPARATION DE PNEUMATIQUES**

(57) La présente invention concerne une méthode pour la préparation d'un pneumatique comprenant la détermination des conditions de vulcanisation du pneumatique non vulcanisé et un système ou une usine pour la préparation de pneumatiques afin de réaliser la méthode selon la présente invention.

FIG.2

**Description**

La présente invention concerne une méthode pour la préparation d'un pneumatique comprenant la détermination des conditions de vulcanisation du pneumatique non vulcanisé et un système ou une usine pour la préparation de pneumatiques afin de réaliser la méthode selon la présente invention.

Dans l'industrie du pneumatique, il est important de répondre au mieux et le plus rapidement possible au besoin des constructeurs automobiles, en particulier en vue du passage aux véhicules électriques. C'est pourquoi développer de nouvelles méthodes de préparation de pneumatiques est essentielle afin de s'adapter aux besoins et aux dernières règlementations. Même si au cours des dernières années différentes méthodes ont été développées, il y a toujours le besoin de développer de nouvelles méthodes notamment pour l'optimisation des étapes de fabrication, l'augmentation de la qualité des pneumatiques et la diminution d'émissions de gaz à effet de serre, comme le dioxyde de carbone.

C'est pourquoi, un objet de la présente invention est de développer une méthode améliorée de préparation de pneumatique permettant de préparer des pneumatiques améliorés tout en limitant les émissions de gaz à effet de serre et étant rentable.

Ainsi, la présente invention concerne une méthode pour la préparation d'un pneumatique, la méthode comprenant

> (a) préparer un pneumatique non vulcanisé, comprenant l'assemblage des composants de pneumatique;
> (b) associer le pneumatique non vulcanisé préparé selon (a) à un moyen d'identification E, le moyen d'identification E comprenant une ou plusieurs informations sur une ou plusieurs caractéristiques dudit pneumatique, obtenant un pneumatique marqué non vulcanisé;
> (c) déterminer les conditions de vulcanisation du pneumatique marqué non vulcanisé obtenu selon (b), comprenant

>> (c.1) identifier le pneumatique non vulcanisé à vulcaniser grâce au moyen d'identification E associé au pneumatique selon (b);
>> (c.2) mesurer sans contact au moins un paramètre dudit pneumatique marqué non vulcanisé influençant le temps de vulcanisation de pneumatiques;
>> (c.3) calculer le temps de vulcanisation du pneumatique non vulcanisé en fonction de l'au moins un paramètre dudit pneumatique marqué non vulcanisé influençant le temps de vulcanisation de pneumatiques mesuré selon (c.2), obtenant le temps de vulcanisation t(V) du pneumatique non vulcanisé;

> (d) vulcaniser le pneumatique non vulcanisé dans un moule de vulcanisation durant le temps de vulcanisation t(V) déterminé selon (c).

En effet, le procédé de la présente invention permet de réduire le temps de cuisson, car les mesures de sûreté, qui correspondent au temps ajouté de cuisson pour compenser l'erreur de mesure, généralement appliquées comme bien connu de l'Homme du métier peuvent être réduites ou même supprimées. Cela réduit donc le temps de vulcanisation (cuisson) des pneumatiques, la consommation d'énergie et donc diminue les émissions de $CO_2$ dues à ce type de procédés. Ce procédé par la réduction du temps de cuisson permet d'être plus efficace et donc plus rentable.

De préférence l'assemblage selon (a) se fait sur un tambour de fabrication.

De préférence les composants de pneumatique comprenant une carcasse de pneumatique, des flancs de pneumatique et une bande de roulement. De préférence l'assemblage comprenant la mise en place de la carcasse sur un tambour de fabrication et la mise en place des flancs et de la bande de roulement sur la carcasse.

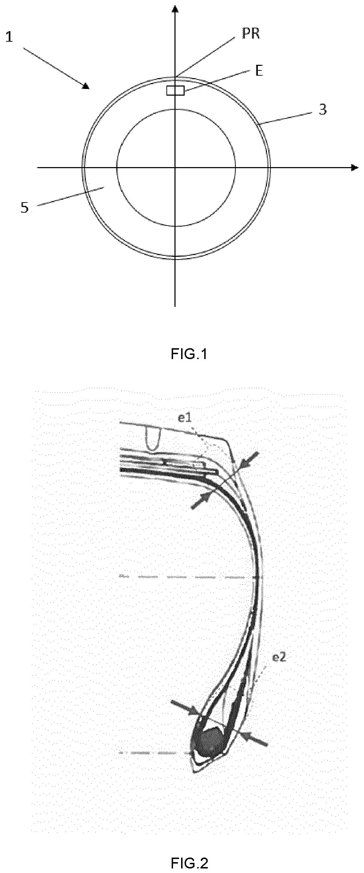

Par exemple les mises en place se font par rapport à un point de référence défini sur le tambour. De préférence le point de référence est sur le tambour de fabrication. De préférence, lors de la mise en place de la bande de roulement sur la carcasse, un joint est formé. Selon une alternative, le point de référence est le joint formé sur le pneumatique (ex. FIG. 1).

De préférence la méthode comprend en outre la fourniture des composants de pneumatique utilisés selon (a) comprenant la préparation des composants de pneumatique, plus préférablement la préparation des composants de carcasse, la préparation des flancs et la préparation de la bande de roulement.

De préférence la préparation des composants de pneumatique comprend l'utilisation de plusieurs unités de préparation de pneumatiques non vulcanisés, les unités de préparation étant connectées les unes aux autres par un réseau, le réseau étant plus préférablement un réseau interne, par exemple un intranet, ou un réseau externe.

De préférence selon (a) l'assemblage des composants de pneumatique est automatisé.

De préférence (a) comprend en outre le gonflage du pneumatique non vulcanisé sur le tambour de fabrication afin d'obtenir une forme toroïdale.

De préférence l'association selon (b) se fait par l'apposition du moyen d'identification E sur un des flancs du pneumatique non vulcanisé préparé selon (a).

Il est possible que l'apposition du moyen d'identification E selon (b) se fasse sur un des flancs du pneumatique non vulcanisé préparé selon (a), de préférence à une distance d1 dudit point de référence. Un exemple de placement de E est illustré à la FIG. 1.

De préférence l'association du pneumatique au moyen d'identification E selon (b), plus préférablement l'apposition du moyen E selon (b), est automatisée.

De préférence E est une étiquette avec un code barre, ou une étiquette avec un QR code, ou une radio-étiquette (en anglais « RFID tag »).

De préférence, le code barre ou le QR code ou la radio-étiquette est unique pour chaque pneumatique. Cela permet d'identifier le pneumatique à vulcaniser et de déterminer les conditions de vulcanisation de manière individualisée et non plus seulement par lot.

De préférence l'association selon (b) se fait lorsque le pneumatique est positionné sur un tambour de fabrication.

De préférence la ou les caractéristiques du pneumatique selon (b) sont la composition chimique dudit pneumatique et/ou les propriétés chimiques dudit pneumatiques et/ou les propriétés physiques dudit pneumatique. Le ou les informations comprises dans E permettent d'augmenter la traçabilité des pneumatiques d'une usine.

De préférence (c.1) comprend la lecture du moyen d'identification E, plus préférablement du code barre ou du QR code ou de la radio-étiquette. L'identification du pneumatique marqué non vulcanisé avant la calcul du temps de vulcanisation permet aussi de mettre à jour les renseignements associés à ce moyen E sur les différentes étapes de fabrication au fur et à mesure du procédé de fabrication.

En effet, dans le contexte de la présente demande, E est un moyen d'identification propre à chaque pneumatique fabriqué selon la présente invention, elle comprend, ou est associé dans un système de traitement à, des informations sur les différentes étapes de fabrications, d'analyse et/ou de contrôle qualité. A l'inverse des procédés de l'art antérieur, l'optimisation du procédé de préparation de pneumatiques, comme l'étape de vulcanisation, se fait non plus par lot mais individuellement.

De préférence la mesure sans contact de l'au moins un paramètre dudit pneumatique marqué non vulcanisé influençant le temps de vulcanisation de pneumatiques selon (c.2) se fait par balayage laser ou tomographie, plus préférablement par balayage laser.

De préférence l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles et/ou le volume du pneumatique. Plus préférablement l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles.

Dans le contexte de la présente invention, l'épaisseur des épaulements du pneumatique est l'épaisseur maximale mesurée des épaulements dudit pneumatique marqué non vulcanisé (cf. FIG. 2).

Dans le contexte de la présente invention, l'épaisseur du pneumatique au niveau des tringles (en anglais « beads ») est l'épaisseur maximale mesurée dudit pneumatique marqué non vulcanisé au niveau des tringles (cf. FIG.2).

La mesure sans contact selon (c.2) permet de faire des mesure de grande précision, de préférence avec une précision à 5 microns, et donc de réduire l'incertitude. Cela va permettre de réduire les mesures de sureté, qui correspondent au temps ajouté de cuisson pour compenser l'erreur de mesure.

De préférence la mesure sans contact selon (c.2) lorsque le pneumatique marqué non vulcanisé est placé sur le tambour de fabrication de pneumatique ou sur un bras robotisé. En effet, la mesure de l'épaisseur des épaulements du pneumatique et/ou l'épaisseur du pneumatique au niveau des tringles, et/ou du volume du pneumatique peut se faire lorsque le pneumatique marqué non vulcanisé est placé sur le bras robotisé ou directement sur le tambour de fabrication.

De préférence lorsque la mesure sans contact se fait lorsque le pneumatique marqué non vulcanisé est placé sur un bras robotisé, ce bras robotisé est aussi utilisé pour la manutention du pneumatique marqué non vulcanisé (par ex. pour positionnement dans un moule de vulcanisation ou pour l'entrée ou la sortie d'un espace de stockage intermédiaire).

De préférence le calcul du temps de vulcanisation t(V) selon (c.3) est automatisé.

De préférence le calcul du temps de vulcanisation t(V) selon (c.3) est effectué en fonction de l'épaisseur des épaulements du pneumatique mesurée selon (c.2) et/ ou l'épaisseur du pneumatique au niveau des tringles mesurée selon (c.2). Optionnellement, le calcul du temps de vulcanisation t(V) selon (c.3) est effectué en fonction du volume du pneumatique mesuré selon (c.2), en plus d'être calculé en fonction de l'épaisseur des épaulements du pneumatique mesurée selon (c.2) et/ ou l'épaisseur du pneumatique au niveau des tringles mesurée selon (c.2).

De préférence le calcul du temps de vulcanisation t(V) selon (c.3) est effectué en fonction

- de l'au moins un paramètre dudit pneumatique marqué non vulcanisé influençant le temps de vulcanisation de pneumatiques étant l'épaisseur des épaulements du pneumatique mesurée selon (c.2) et/ ou l'épaisseur du pneumatique au niveau des tringles mesurée selon (c.2) et/ ou du volume du pneumatique mesuré selon (c.2) et/ ou du volume du pneumatique mesuré selon (c.2), de préférence étant l'épaisseur des épaulements du pneumatique mesurée selon (c.2) et/ ou l'épaisseur du pneumatique au niveau des tringles mesurée selon (c.2);
- des mesures de sécurité étant le temps ajouté de cuisson pour compenser l'erreur de mesure lors de la mesure selon (c.2 );

- optionnellement de la composition du pneumatique non vulcanisé, plus préférablement de la conductibilité thermique basée sur la composition du pneumatique non vulcanisé;
- optionnellement de la température du pneumatique non vulcanisé à vulcaniser selon (d).

De préférence le calcul du temps de vulcanisation t(V) selon (c.3) est effectué selon une des formules suivantes:

| la formule (1): | $t(V) = A + Xb + Yc$ | (1) |
| la formule (2): | $t(V) = A + Xb + Yc + Zd$ | (2) |
| la formule (3): | $t(V) = A + Xb + Yc + Zd + We$ | (3) |

dans lesquelles: A est une constante; Xb est une fonction de l'épaisseur des épaulements du pneumatique mesurée selon (c.2) et/ou l'épaisseur du pneumatique au niveau des tringles mesurée selon (c.2) et/ou du volume du pneumatique mesuré selon (c.2), de préférence de l'épaisseur des épaulements du pneumatique mesurée selon (c.2) et/ou l'épaisseur du pneumatique au niveau des tringles mesurée selon (c.2); Yd est une fonction de mesures de sécurité étant le temps ajouté de cuisson pour compenser l'erreur de mesure selon (c.2 ); Zd est une fonction de la composition de pneumatique non vulcanisé; We est une fonction de la température du pneumatique non vulcanisé à vulcaniser selon (d).

De préférence le temps de vulcanisation t(V) est calculé selon (c.3) à une température T et la vulcanisation selon (d) se fait à la température T. La température T est connue de l'Homme du métier et peut varier selon le type de pneumatiques fabriqués.

De préférence la température T est dans la gamme de 140 à 300°C, plus préférablement dans la gamme de 150 à 200°C.

De préférence la détermination les conditions de vulcanisation du pneumatique marqué non vulcanisé selon (c) est opéré à l'aide d'un moyen de traitement électronique des données TED. Ce moyen peut par exemple utilisé l'intelligence artificielle.

De préférence la méthode comprend l'utilisation d'un ou plusieurs jumeaux numériques.

De préférence, l'un ou plusieurs jumeaux numériques se basent sur des données numériques de conception de pneumatiques, des données recueillies par l'Internet des Objets et d'une interface Homme-machine qui met en corrélation et présente les données pour favoriser la prise de décision. De préférence, la prise de décision est automatisée.

De préférence la méthode de la présente invention comprend en outre une ou plusieurs étapes intermédiaires de stockage. De préférence, l'une ou plusieurs étapes intermédiaires de stockage sont automatisées.

De préférence la méthode comprend une étape intermédiaire S(I) de stockage avant (d) et après (b). De préférence (c) est effectué avant S(I) ou après S(I), lors de la manutention du pneumatique non vulcanisé sur un bras robotisé.

De préférence, lorsqu'un bras robotisé est utilisé selon (c.1.1), la méthode comprend le retrait du pneumatique marqué non vulcanisé, son dépôt sur un convoyeur (tapis roulant) et la prise en charge du pneumatique avec ledit bras robotisé.

De préférence le bras robotisé est connecté à un réseau et éventuellement avec des unités de préparation de pneumatiques non vulcanisés, plus préférablement les unités de préparation de pneumatiques décrites dans la présente.

De préférence, le réseau est un réseau interne, comme intranet, ou un réseau externe, de manière plus préférée un réseau interne.

De préférence le moule de pneumatique utilisé selon (d) comprend deux parties latérales, chacune servant au moulage extérieur d'un flanc du pneumatique et une couronne périphérique divisée en au moins deux segments, plus préférablement divisée en 3 à 20 segments, plus préférablement en 5 à 15 segments, plus préférablement en 6 à 10 segments.

De préférence lors de l'étape (d) une vessie de vulcanisation est utilisée dans le moule de vulcanisation, notamment pour mouler la forme interne du pneumatique.

Dans le contexte de la présente invention, le terme « forme interne » relative au moule signifie la forme de la partie interne du moule, à savoir la partie interne du moule qui accueille et est en contact avec le pneumatique marqué non vulcanisé.

Dans le contexte de la présente invention, la couronne périphérique est destinée à mouler la surface radialement externe de la bande de roulement.

Optionnellement, le moule de vulcanisation est connecté à un réseau, à savoir un réseau interne, comme un intranet, ou un réseau externe, et au moyen de traitement électronique des données TED. Le moule de vulcanisation peut en outre être connecté aux unités de préparation du pneumatique définies dans cette invention.

De préférence la méthode de la présente invention est une méthode continue ou semi-continue.

Optionnellement, la méthode comprend l'utilisation d'un ou plusieurs tapis roulants.

La présente invention concerne en outre un système ou une usine pour réaliser la méthode de préparation de pneumatique selon la présente invention, comprenant:

une unité d'assemblage de pneumatique pour fabriquer un pneumatique non vulcanisé;
un moyen d'identification E de pneumatique;
un moyen pour associer le pneumatique non vulcanisé à E;
un moyen de lecture de E;
un moyen de mesure sans contact de l'au moins un paramètre dudit pneumatique marqué non vulcanisé influençant le temps de vulcanisation de pneumatiques, de préférence étant l'épaisseur des épaulements du pneumatique et/ ou l'épaisseur du pneumatique au niveau des tringles et/ ou du volume du pneumatique;
un moyen pour calculer le temps de vulcanisation du pneumatique marqué non vulcanisé; et
une unité de vulcanisation comprenant le moule de vulcanisation et un moyen de chauffe pour la vulcanisation.

De préférence le système ou l'usine comprend en outre au moins un tambour de fabrication de pneumatique.

De préférence le système ou l'usine comprend en outre un moyen de traitement électronique des données TED pour la détermination les conditions de vulcanisation du pneumatique marqué non vulcanisé.

De préférence le système ou l'usine comprend en outre au moins un moyen pour la fourniture des composants de pneumatiques. Le au moins un moyen pour la fourniture des composants de pneumatiques étant de préférence plusieurs unités de préparation de pneumatiques non vulcanisés.

De préférence les unités de préparation comprennent une ou plusieurs unités de mélange, une ou plusieurs unités d'extrusion, une ou plusieurs unités de coupe, une ou plusieurs unités d'enroulement de perles/tringles (en anglais « beads ») et d'apex, et/ou une ou plusieurs unités d'assemblage.

De préférence E est une étiquette avec un code barre, ou une étiquette avec un QR code, ou une radio-étiquette (en anglais « RFID tag »).

De préférence le système ou l'usine comprend en outre un moyen pour éditer E.

De préférence le moyen de mesure sans contact de l'au moins un paramètre dudit pneumatique marqué non vulcanisé influençant le temps de vulcanisation de pneumatiques est un appareil de mesure laser ou un tomographe.

De préférence le système ou l'usine comprend en outre un réseau permettant la liaison entre au moins un des moyens compris dans ledit système ou ladite usine et au moins une des unité comprise dans ledit système ou ladite usine, plus préférablement un réseau interne du type intranet.

De préférence, le système ou l'usine comprend en outre un ou plusieurs tapis roulants.

De préférence le système ou l'usine comprend en outre au moins une unité de stockage de pneumatiques, plus préférablement au moins une unité de stockage de pneumatiques non vulcanisés et au moins une unité de stockage de pneumatiques vulcanisés.

La présente invention concerne en outre un pneumatique vulcanisé pouvant être obtenu ou obtenu par une méthode selon la présente invention.

Dans le contexte de la présente invention, le terme « jumeau numérique » se dit d'une représentation virtuelle d'un produit ou d'un procédé qui permet de comprendre et de prévoir ses équivalents physiques afin d'améliorer un objet ou une méthode.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « La méthode de l'un quelconque des modes de réalisation 1 à 3 », chaque mode de réalisation dans cette gamme est censé être explicitement divulgué à l'homme du métier, c'est-à-dire que la formulation de ce terme doit être comprise par l'homme du métier comme étant synonyme de « la méthode de l'un quelconque des modes de réalisation 1, 2 et 3 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention.

Selon le mode de réalisation 1 de la présente invention, une méthode pour la préparation d'un pneumatique, la méthode comprenant

(a) préparer un pneumatique non vulcanisé, comprenant l'assemblage des composants de pneumatique;
(b) associer le pneumatique non vulcanisé préparé selon (a) à un moyen d'identification E, le moyen d'identification E comprenant une ou plusieurs informations sur une ou plusieurs caractéristiques dudit pneumatique, obtenant un pneumatique marqué non vulcanisé;
(c) déterminer les conditions de vulcanisation du pneumatique marqué non vulcanisé obtenu selon (b), comprenant

(c.1) identifier le pneumatique non vulcanisé à vulcaniser grâce au moyen d'identification E associé au pneumatique selon (b);

(c.2) mesurer sans contact au moins un paramètre dudit pneumatique marqué non vulcanisé influençant le temps de vulcanisation de pneumatiques;

(c.3) calculer le temps de vulcanisation du pneumatique non vulcanisé en fonction de l'au moins un paramètre dudit pneumatique marqué non vulcanisé influençant le temps de vulcanisation de pneumatiques mesuré selon (c.2), obtenant le temps de vulcanisation t(V) du pneumatique non vulcanisé;

(d) vulcaniser le pneumatique non vulcanisé dans un moule de vulcanisation durant le temps de vulcanisation t(V) déterminé selon (c).

Mode de réalisation 2: La méthode selon le mode de réalisation 1, dans laquelle l'assemblage selon (a) se fait sur un tambour de fabrication.

Mode de réalisation 3: La méthode selon le mode de réalisation 1 ou 2, dans laquelle les composants de pneumatique comprennent une carcasse de pneumatique, des flancs de pneumatique et une bande de roulement, de préférence l'assemblage comprend la mise en place de la carcasse sur un tambour de fabrication et la mise en place des flancs et de la bande de roulement sur la carcasse.

Mode de réalisation 4: La méthode selon une quelconque des modes de réalisation 1 à 3, dans laquelle selon (a) l'assemblage des composants de pneumatique est automatisé.

Mode de réalisation 5: La méthode selon une quelconque des modes de réalisation 1 à 4, dans laquelle l'association selon (b) se fait par l'apposition du moyen d'identification E sur un des flancs du pneumatique non vulcanisé préparé selon (a).

Mode de réalisation 6: La méthode selon une quelconque des modes de réalisation 1 à 5, dans laquelle l'association du pneumatique au moyen d'identification E selon (b) est automatisée.

Mode de réalisation 7: La méthode selon une quelconque des modes de réalisation 1 à 6, dans laquelle E est une étiquette avec un code barre, ou une étiquette avec un QR code, ou une radio-étiquette (en anglais « RFID tag »).

Mode de réalisation 8: La méthode selon une quelconque des modes de réalisation 1 à 7, dans laquelle l'association selon (b) se fait lorsque le pneumatique est positionné sur un tambour de fabrication.

Mode de réalisation 9: La méthode selon une quelconque des modes de réalisation 1 à 8, dans laquelle la ou les caractéristiques du pneumatique selon (b) sont la composition chimique dudit pneumatique et/ou les propriétés chimiques dudit pneumatiques et/ou les propriétés physiques dudit pneumatique.

Mode de réalisation 10: La méthode selon une quelconque des modes de réalisation 1 à 9, dans laquelle (c.1) comprend la lecture du moyen d'identification E, de préférence du code barre ou du QR code ou de la radio-étiquette.

Mode de réalisation 11: La méthode selon une quelconque des modes de réalisation 1 à 10, dans laquelle la mesure sans contact de l'au moins un paramètre dudit pneumatique marqué non vulcanisé influençant le temps de vulcanisation de pneumatiques selon (c.2) se fait par balayage laser ou tomographie, de préférence par balayage laser.

Mode de réalisation 12: La méthode selon une quelconque des modes de réalisation 1 à 11, dans laquelle l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles et/ou le volume du pneumatique, de préférence dans laquelle l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles.

Mode de réalisation 13: La méthode selon une quelconque des modes de réalisation 1 à 12, dans laquelle la mesure sans contact selon (c.2) se fait lorsque le pneumatique marqué non vulcanisé est placé sur un tambour de fabrication de pneumatique, de préférence le tambour de fabrication selon le mode de réalisation 2, ou sur un bras robotisé.

Mode de réalisation 14: La méthode selon une quelconque des modes de réalisation 1 à 13, dans laquelle le calcul du temps de vulcanisation t(V) selon (c.3) est automatisé.

Mode de réalisation 15: La méthode selon une quelconque des modes de réalisation 1 à 14, dans laquelle le calcul du temps de vulcanisation t(V) selon (c.3) est effectué en fonction de l'au moins un paramètre dudit pneumatique marqué non vulcanisé influençant le temps de vulcanisation de pneumatiques, de préférence en fonction de l'épaisseur des épaulements du pneumatique mesurée selon (c.2) et/ ou de l'épaisseur du pneumatique au niveau des tringles mesurée selon (c.2).

Mode de réalisation 16: La méthode selon une quelconque des modes de réalisation 1 à 15, dans laquelle le calcul du temps de vulcanisation t(V) selon (c.3) est effectué en fonction

- de l'au moins un paramètre dudit pneumatique marqué non vulcanisé influençant le temps de vulcanisation de pneumatiques étant l'épaisseur des épaulements du pneumatique mesurée selon (c.2) et/ ou l'épaisseur du pneumatique au niveau des tringles mesurée selon (c.2) et/ ou du volume du pneumatique mesuré selon (c.2);

- des mesures de sécurité étant le temps ajouté de cuisson pour compenser l'erreur de mesure lors de la mesure selon (c.2);
- optionnellement de la composition du pneumatique non vulcanisé, de préférence de la conductibilité thermique basée sur la composition du pneumatique non vulcanisé;
- optionnellement de la température du pneumatique non vulcanisé à vulcaniser selon (d).

Mode de réalisation 17: La méthode selon le mode de réalisation 16, dans laquelle le calcul du temps de vulcanisation t(V) selon (c.3) est effectué selon une des formules suivantes:

la formule (1):    $t(V) = A + Xb + Yc$    (1)
la formule (2):    $t(V) = A + Xb + Yc + Zd$    (2)
la formule (3):    $t(V) = A + Xb + Yc + Zd + We$    (3)

dans lesquelles: A est une constante; Xb est une fonction de l'épaisseur des épaulements du pneumatique mesurée selon (c.2) et/ ou l'épaisseur du pneumatique au niveau des tringles mesurée selon (c.2) et/ ou du volume du pneumatique mesuré selon (c.2), de préférence de l'épaisseur des épaulements du pneumatique mesurée selon (c.2) et/ ou l'épaisseur du pneumatique au niveau des tringles mesurée selon (c.2); Yd est une fonction de mesures de sécurité étant le temps ajouté de cuisson pour compenser l'erreur de mesure selon (c.2); Zd est une fonction de la composition de pneumatique non vulcanisé; We est une fonction de la température du pneumatique non vulcanisé à vulcaniser selon (d).

Mode de réalisation 18: La méthode selon une quelconque des modes de réalisation 1 à 17, dans laquelle le temps de vulcanisation t(V) est calculé selon (c.3) à une température T et la vulcanisation selon (d) se fait à la température T.

Mode de réalisation 19: La méthode selon le mode de réalisation 18, dans laquelle la température T est dans la gamme de 140 à 300 °C, de préférence dans la gamme de 150 à 200 °C.

Mode de réalisation 20: La méthode selon une quelconque des modes de réalisation 1 à 19, comprend en outre une étape de stockage.

Mode de réalisation 21: La méthode selon le mode de réalisation 20, dans laquelle (c) est effectué avant l'étape de stockage, ou après l'étape de stockage, lors de la manutention du pneumatique non vulcanisé sur un bras robotisé.

Mode de réalisation 22: Un système ou une usine pour réaliser la méthode de préparation de pneumatique selon l'un quelconque des modes de réalisation 1 à 21, comprenant:

une unité d'assemblage de pneumatique pour fabriquer un pneumatique non vulcanisé;
un moyen d'identification E de pneumatique;
un moyen pour associer le pneumatique non vulcanisé à E;
un moyen de lecture de E;
un moyen de mesure sans contact de l'au moins un paramètre dudit pneumatique marqué non vulcanisé influençant le temps de vulcanisation de pneumatiques, de préférence étant l'épaisseur des épaulements du pneumatique et/ ou l'épaisseur du pneumatique au niveau des tringles et/ ou du volume du pneumatique; et
une unité de vulcanisation comprenant le moule de vulcanisation et un moyen de chauffe pour la vulcanisation.

Mode de réalisation 23: Un pneumatique vulcanisé pouvant être obtenu ou obtenu par une méthode selon l'un quelconque des modes de réalisation 1 à 21.

Description des figures

La FIG.1 représente un dessin d'une vue d'un côté du pneumatique non vulcanisé 1 marqué d'un moyen d'identification E (étiquette avec un code barre, étiquette un QR code ou radio-étiquette) et placé sur un tambour de fabrication de pneumatiques obtenu selon (b) de la méthode de la présente invention. Sur la figure sont représentés la bande de roulement 3, le flanc 5, le moyen d'identification E et le point de référence PR sur le pneumatique.

La FIG. 2 représente une coupe d'un pneumatique non vulcanisé où l'on voit l'épaisseur (maximale) de l'épaulement du pneumatique e1 et l'épaisseur (maximale) du pneumatique au niveau des tringles mesurées de préférence par un appareil de mesure laser.

**Revendications**

1.  Une méthode pour la préparation d'un pneumatique, la méthode comprenant:

    (a) préparer un pneumatique non vulcanisé, comprenant l'assemblage des composants de pneumatique;
    (b) associer le pneumatique non vulcanisé préparé selon (a) à un moyen d'identification E, le moyen d'identification E comprenant une ou plusieurs informations sur une ou plusieurs caractéristiques dudit pneumatique, obtenant un pneumatique marqué non vulcanisé;
    (c) déterminer les conditions de vulcanisation du pneumatique marqué non vulcanisé obtenu selon (b), comprenant

    (c.1) identifier le pneumatique non vulcanisé à vulcaniser grâce au moyen d'identification E associé au pneumatique selon (b);
    (c.2) mesurer sans contact au moins un paramètre dudit pneumatique marqué non vulcanisé influençant le temps de vulcanisation de pneumatiques;
    (c.3) calculer le temps de vulcanisation du pneumatique non vulcanisé en fonction de l'au moins un paramètre dudit pneumatique marqué non vulcanisé influençant le temps de vulcanisation de pneumatiques mesuré selon (c.2), obtenant le temps de vulcanisation t(V) du pneumatique non vulcanisé;

    (d) vulcaniser le pneumatique non vulcanisé dans un moule de vulcanisation durant le temps de vulcanisation t(V) déterminé selon (c).

2.  La méthode selon la revendication 1, dans laquelle l'association du pneumatique au moyen d'identification E selon (b), de préférence par l'apposition du moyen d'identification E sur un des flancs du pneumatique non vulcanisé préparé selon (a), est automatisée.

3.  La méthode selon la revendication 1 ou 2, dans laquelle E est une étiquette avec un code barre, ou une étiquette avec un QR code, ou une radio-étiquette.

4.  La méthode selon une quelconque des revendications 1 à 3, dans laquelle la mesure sans contact de l'au moins un paramètre dudit pneumatique marqué non vulcanisé influençant le temps de vulcanisation de pneumatiques selon (c.2) se fait par balayage laser ou tomographie, de préférence par balayage laser.

5.  La méthode selon une quelconque des revendications 1 à 4, dans laquelle l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles et/ou le volume du pneumatique, de préférence dans laquelle l'au moins un paramètre dudit pneumatique marqué non vulcanisé influençant le temps de vulcanisation de pneumatiques est l'épaisseur des épaulements du pneumatique et/ou l'épaisseur du pneumatique au niveau des tringles.

6.  La méthode selon une quelconque des revendications 1 à 5, dans laquelle la mesure sans contact selon (c.2) se fait lorsque le pneumatique marqué non vulcanisé est placé sur un tambour de fabrication de pneumatique ou sur un bras robotisé.

7.  La méthode selon une quelconque des revendications 1 à 6, dans laquelle le calcul du temps de vulcanisation t(V) selon (c.3) est effectué en fonction

    - de l'au moins un paramètre dudit pneumatique marqué non vulcanisé influençant le temps de vulcanisation de pneumatiques étant l'épaisseur des épaulements du pneumatique mesurée selon (c.2) et/ ou l'épaisseur du pneumatique au niveau des tringles mesurée selon (c.2) et/ ou du volume du pneumatique mesuré selon (c.2);
    - des mesures de sécurité étant le temps ajouté de cuisson pour compenser l'erreur de mesure selon (c.2);
    - optionnellement de la composition du pneumatique non vulcanisé, de préférence de la conductibilité thermique basée sur la composition du pneumatique non vulcanisé;
    - optionnellement de la température du pneumatique non vulcanisé à vulcaniser selon (d).

8.  La méthode selon la revendication 7, dans laquelle le calcul du temps de vulcanisation t(V) selon (c.3) est effectué selon une des formules suivantes:

$$t(V) = A + Xb + Yc \qquad (1)$$

$$t(V) = A + Xb + Yc + Zd \qquad (2)$$

$$t(V) = A + Xb + Yc + Zd + We \qquad (3)$$

dans lesquelles: A est une constante; Xb est une fonction de l'épaisseur des épaulements du pneumatique mesurée selon (c.2) et/ ou l'épaisseur du pneumatique au niveau des tringles mesurée selon (c.2) et/ ou du volume du pneumatique mesuré selon (c.2), de préférence de l'épaisseur des épaulements du pneumatique mesurée selon (c.2) et/ ou l'épaisseur du pneumatique au niveau des tringles mesurée selon (c.2); Yd est une fonction de mesures de sécurité étant le temps ajouté de cuisson pour compenser l'erreur de mesure selon (c.2); Zd est une fonction de la composition de pneumatique non vulcanisé; et We est une fonction de la température du pneumatique non vulcanisé à vulcaniser selon (d).

9. La méthode selon une quelconque des revendications 1 à 8, dans laquelle le temps de vulcanisation t(V) est calculé selon (c.3) à une température T et la vulcanisation selon (d) se fait à la température T.

10. Un système ou une usine pour réaliser la méthode de préparation de pneumatique selon l'un quelconque des revendications 1 à 9, comprenant:

une unité d'assemblage de pneumatique pour fabriquer un pneumatique non vulcanisé;
un moyen d'identification E de pneumatique;
un moyen pour associer le pneumatique non vulcanisé à E;
un moyen de lecture de E;
un moyen de mesure sans contact de l'au moins un paramètre dudit pneumatique marqué non vulcanisé influençant le temps de vulcanisation de pneumatiques, de préférence étant l'épaisseur des épaulements du pneumatique et/ ou l'épaisseur du pneumatique au niveau des tringles et/ ou du volume du pneumatique;
un moyen pour calculer le temps de vulcanisation du pneumatique marqué non vulcanisé; et
une unité de vulcanisation comprenant le moule de vulcanisation et un moyen de chauffe pour la vulcanisation.

FIG.1

FIG.2

Europäisches
Patentamt
European
Patent Office
Office européen
des brevets

# EUROPEAN SEARCH REPORT

**Application Number**

EP 25 17 0273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2007 098756 A (BRIDGESTONE CORP) 19 April 2007 (2007-04-19) * paragraphs [0008] - [0012]; figures 1-7 * | 1-10 | INV. B29D30/06 |
| A | CN 114 434 698 A (SALT CITY HENGTAI RUBBER CO LTD) 6 May 2022 (2022-05-06) * abstract; claims 1-7 * | 1-10 | |
| A | US 2016/082681 A1 (TAKIZAWA HIROSHI [JP] ET AL) 24 March 2016 (2016-03-24) * abstract; claims 1-3; figures 1-3 * | 1-10 | |

**TECHNICAL FIELDS SEARCHED (IPC)**

B29D

The present search report has been drawn up for all claims

| Place of search | Date of completion of the search | Examiner |
|---|---|---|
| Munich | 27 August 2025 | Callan, Feargel |

EPO FORM 1503 03.82 (P04C01)

## ANNEX TO THE EUROPEAN SEARCH REPORT
## ON EUROPEAN PATENT APPLICATION NO.

EP 25 17 0273

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2025

| Patent document cited in search report | | Publication date | Patent family member(s) | | Publication date |
|---|---|---|---|---|---|
| JP 2007098756 A | | 19-04-2007 | JP | 4730823 B2 | 20-07-2011 |
| | | | JP | 2007098756 A | 19-04-2007 |
| CN 114434698 A | | 06-05-2022 | NONE | | |
| US 2016082681 A1 | | 24-03-2016 | CN | 105246662 A | 13-01-2016 |
| | | | JP | 5737331 B2 | 17-06-2015 |
| | | | JP | 2014226900 A | 08-12-2014 |
| | | | US | 2016082681 A1 | 24-03-2016 |
| | | | WO | 2014192742 A1 | 04-12-2014 |

EPO FORM P0459

For more details about this annex : see Official Journal of the European Patent Office, No. 12/82